# EUROPEAN PATENT APPLICATION

(11) **EP 4 557 414 A2**
(43) Date of publication of application: **21.05.2025**
(21) Application number: 24212734.8
(22) Date of filing: 13.11.2024
(51) Int. Cl.: H01M 8/2483, H01M 8/0208, C25B 1/04, C25B 15/08, H01M 8/0258, H01M 8/2432, H01M 8/248, H01M 8/12

(54) **INTERNALLY MANIFOLDED INTERCONNECTS WITH PLURAL FLOW DIRECTIONS AND ELECTROCHEMICAL CELL COLUMN INCLUDING SAME**

(30) Priority: 14.11.2023 US 202363598678 P
(71) Applicant: Bloom Energy Corporation, San Jose, CA 95134 (US)
(72) Inventor: LU, Zigui, San Jose, 95134 (US); GASDA, Michael, San Jose, 95134 (US); BONE, Sagar, San Jose, 95134 (US); PARHAR, Sachin, San Jose, 95134 (US)
(74) Representative: Wichmann, Hendrik

(57) **Abstract**

An interconnect includes fuel inlets and outlets that extend through the interconnect at first and second peripheral edges, an air side, and an opposing fuel side. The air side includes an air field including air channels that extend in a first direction, from a third peripheral edge to an opposing fourth peripheral edge, and air side seal surfaces surrounding the first fuel inlet and the first fuel outlet. The fuel side includes a fuel field including fuel channels that extend in the first direction, a fuel inlet manifold configured to fluidly connect the first fuel inlet to first ends of the fuel channels, a fuel outlet manifold configured to fluidly connect the first fuel outlet to second ends of the fuel channels, and a fuel side seal surface extending along the first, second, third, and fourth peripheral edges.

## Description

### FIELD

The embodiments of the present disclosure are generally directed to electrochemical cell column components and more specifically to interconnects which are internally manifolded for fuel and which have plural fuel flow directions.

### BACKGROUND

In a high temperature fuel cell system, such as a solid oxide fuel cell (SOFC) system, an oxidizing flow is directed to the cathode side of the fuel cell while a fuel flow is directed to the anode side of the fuel cell. The oxidizing flow is typically air, while the fuel flow can be a hydrocarbon fuel, such as methane, natural gas, ethanol, or methanol, or a non-hydrocarbon fuel such as ammonia or pure hydrogen. The fuel cell, operating at a typical temperature between 750°C and 950°C, enables the transport of negatively charged oxygen ions from the cathode flow stream to the anode flow stream, where the ions combine with either free hydrogen or hydrogen in a hydrocarbon molecule to form water vapor and/or with carbon monoxide to form carbon dioxide. The excess electrons from the negatively charged ions are routed back to the cathode side of the fuel cell through an electrical circuit completed between anode and cathode, resulting in an electrical current flow through the circuit.

Fuel cell stacks may be either internally or externally manifolded for fuel and air. In internally manifolded stacks, the fuel and/or air are distributed to each cell using risers contained within the stack. In other words, the gas flows through openings or holes in the supporting layer of each fuel cell, such as the electrolyte layer, and gas flow separator of each cell. In externally manifolded stacks, the stack is open on the fuel and air inlet and outlet sides, and the fuel and air are introduced and collected independently of the stack hardware. For example, the inlet and outlet fuel and air flow in separate channels between the stack and the manifold housing in which the stack is located.

Fuel cell stacks are frequently built from a multiplicity of cells in the form of planar elements, tubes, or other geometries. Fuel and air are provided to electrochemically active surfaces, which can be large. One component of a fuel cell stack is the so called gas flow separator (referred to as a gas flow separator plate in a planar stack) that separates the individual cells in the stack. The gas flow separator plate separates fuel, such as hydrogen or a hydrocarbon fuel, flowing to the fuel electrode (i.e., anode) of one cell in the stack from oxidant, such as air, flowing to the air electrode (i.e., cathode) of an adjacent cell in the stack. Frequently, the gas flow separator plate is also used as an interconnect which electrically connects the fuel electrode of one cell to the air electrode of the adjacent cell. When used as an interconnect, the gas flow separator plate is made of or contains an electrically conductive material.

### SUMMARY

According to various embodiments of the present disclosure, an interconnect comprises a first fuel inlet and a first fuel outlet that extend through the interconnect adjacent to respective opposing first and second peripheral edges of the interconnect; an air side comprising: an air field comprising air channels that extend in a first direction, from a third peripheral edge of the interconnect to an opposing fourth peripheral edge of the interconnect; and air side seal surfaces located on two opposing sides of the air field, and surrounding the first fuel inlet and the first fuel outlet; and a fuel side opposing the air side, the fuel side comprising: a fuel field comprising fuel channels that extend in the first direction; a fuel inlet manifold located between the fourth peripheral edge and the fuel field and configured to fluidly connect the first fuel inlet to first ends of the fuel channels; a fuel outlet manifold located between the third peripheral edge and the fuel field and configured to fluidly connect the first fuel outlet to second ends of the fuel channels; and a fuel side seal surface extending along the first, second, third, and fourth peripheral edges.

According to various embodiments of the present disclosure, an interconnect comprises a fuel inlet and a fuel outlet that extend through the interconnect adjacent to respective opposing first and second peripheral edges of the interconnect; an air side comprising: an air field comprising air channels that extend in a first direction, wherein a portion of the air channels extend from the first peripheral edge of the interconnect to the second peripheral edge of the interconnect; and air side seal surfaces located along opposing third and fourth peripheral edges of the interconnect on two opposing sides of the air field, and air side seal surfaces surrounding the first fuel inlet and the first fuel outlet; and a fuel side opposing the air side, the fuel side comprising: a fuel field comprising fuel channels that extend in the first direction; a fuel inlet manifold extending in a second direction perpendicular to the first direction, and located between the first peripheral edge and the fuel field and configured to fluidly connect the fuel inlet to first ends of the fuel channels; a fuel outlet manifold extending in the second horizontal direction, and located between the second peripheral edge and the fuel field and configured to fluidly connect the fuel outlet to second ends of the fuel channels; and a fuel side seal surface extending along the first, second, third, and fourth peripheral edges.

According to various embodiments of the present disclosure, an interconnect comprises a first fuel inlet, a first fuel outlet, a first air inlet, and a first air outlet, all of which extend through the interconnect, the first fuel inlet and first air outlet located adjacent to a first peripheral edge of the interconnect, and the first fuel outlet and the first air inlet located adjacent to an opposing second peripheral edge of the interconnect; an air side comprising: an air field comprising air channels that extend in a first direction parallel to opposing third and fourth peripheral edges of the interconnect; an air inlet manifold fluidly connecting the first air inlet to first ends of the air channels; an air outlet manifold fluidly connecting the first air outlet to opposing second ends of the air channels; and a fuel side opposing the air side, the fuel side comprising: a fuel field comprising fuel channels that extend in the first direction; a fuel inlet manifold extending in a second direction perpendicular to the first direction and fluidly connecting the first fuel inlet to first ends of the fuel channels; and a fuel outlet manifold extending in the second direction and fluidly connecting the first fuel outlet to opposing second ends of the fuel channels.

According to various embodiments of the present disclosure, an interconnect comprises fuel inlets and fuel outlets that extend through the interconnect adjacent to respective opposing first and second peripheral edges of the interconnect; an air side comprising: an air field comprising air channels that extend in a first direction, from a third peripheral edge of the interconnect to an opposing fourth peripheral edge of the interconnect; and air side seal surfaces located on two opposing sides of the air field, surrounding the fuel inlets and the fuel outlets; and a fuel side opposing the air side, the fuel side comprising: a fuel field comprising fuel channels that extend in the first direction and in a second direction perpendicular to the first direction; and a fuel side seal surface extending along the first, second, third, and fourth peripheral edges.

### BRIEF DESCRIPTION OF THE DRAWINGS

The accompanying drawings, which are incorporated herein and constitute part of this specification, illustrate example embodiments of the invention, and together with the general description given above and the detailed description given below, serve to explain the features of the invention.
FIG. 1A is a perspective view of a fuel cell column, FIG. 1B is a perspective view of one counter-flow solid oxide fuel cell (SOFC) stack included in the column of FIG. 1A, and FIG. 1C is a side cross-sectional view of a portion of the stack of FIG. 1B.
FIG. 2A is a top view of the air side of an interconnect of the stack of FIG. 1B, and FIG. 2B is a top view of the fuel side of the interconnect.
FIG. 3A is a perspective view of an electrochemical cell column that is internally manifolded for fuel, FIG. 3B is an exploded perspective view of a portion of the column of FIG. 3A, FIG. 3C is a top view of the fuel side of a crossflow interconnect that may be included in the column of FIG. 3A.
FIG. 4A is a perspective view of a fuel side of a partial counterflow interconnect, according to various embodiments of the present disclosure, which may be included in the column of FIG. 3A, and FIG. 4B is a perspective view of the air side of the interconnect of FIG. 4A.
FIG. 5A is a perspective view of a partial counterflow interconnect, according to various embodiments of the present disclosure, and FIG. 5B is a perspective view of the air side of the interconnect of FIG. 5A.
FIG. 6A is a perspective view of the fuel side of a partial counterflow interconnect, according to various embodiments of the present disclosure, and FIG. 6B is a perspective view of the air side of the interconnect of FIG. 6A.
FIG. 7A is a perspective view of the fuel side of a partial counterflow interconnect, according to various embodiments of the present disclosure, and FIG. 7B is a perspective view of the air side of the interconnect of FIG. 7A.
FIG. 8A is a perspective view of the fuel side of a partial counterflow interconnect, according to various embodiments of the present disclosure, and FIG. 8B is a perspective view of the air side of the interconnect of FIG. 8A.
FIG. 9A is a perspective view of the fuel side of a partial counterflow interconnect, according to various embodiments of the present disclosure, and FIG. 9B is a perspective view of the air side of the interconnect of FIG. 9A.
FIG. 10A is a perspective view of the fuel side of a partial counterflow interconnect, according to various embodiments of the present disclosure, and FIG. 10B is a perspective view of the air side of the interconnect of FIG. 10A.
FIG. 11A is a perspective view of the fuel side of a partial counterflow interconnect, according to various embodiments of the present disclosure, and FIG. 11B is a perspective view of the air side of the interconnect of FIG. 11A.
FIG. 12A is a perspective view of the fuel side of a partial counterflow interconnect, according to various embodiments of the present disclosure, and FIG. 12B is a perspective view of the air side of the interconnect of FIG. 12A.

### DETAILED DESCRIPTION

The various embodiments will be described in detail with reference to the accompanying drawings. The drawings are not necessarily to scale and are intended to illustrate various features of the invention. Wherever possible, the same reference numbers will be used throughout the drawings to refer to the same or like parts. References made to particular examples and implementations are for illustrative purposes and are not intended to limit the scope of the invention or the claims.

Ranges can be expressed herein as from "about" one particular value, and/or to "about" another particular value. When such a range is expressed, examples include from the one particular value and/or to the other particular value. Similarly, when values are expressed as approximations, by use of the antecedent "about" or "substantially" it will be understood that the particular value forms another aspect. In some embodiments, a value of "about X" may include values of +/- 1% X. It will be further understood that the endpoints of each of the ranges are significant both in relation to the other endpoint, and independently of the other endpoint.

Electrochemical cell systems include fuel cell and electrolyzer cell systems. In a high temperature fuel cell system, such as a solid oxide fuel cell (SOFC) system, an oxidizing flow is directed to the cathode side of the fuel cell while a fuel flow is directed to the anode side of the fuel cell. The oxidizing flow is typically air, while the fuel flow can be a hydrogen (H₂) or a hydrocarbon fuel, such as methane, natural gas, ethanol, or methanol, or a hydrogen containing fuel such as ammonia. The fuel cell, operating at a typical temperature between 750°C and 950°C, enables the transport of negatively charged oxygen ions from the cathode flow stream to the anode flow stream, where the oxygen ions combine with either free hydrogen or hydrogen in a hydrocarbon molecule to form water vapor and/or with carbon monoxide to form carbon dioxide. The excess electrons from the negatively charged ions are routed back to the cathode side of the fuel cell through an electrical circuit completed between anode and cathode, resulting in an electrical current flow through the circuit. In an electrolyzer system, such as a solid oxide electrolyzer system, water (e.g., steam) is separated into hydrogen and oxygen by applying a voltage across the electrolyzer cells.

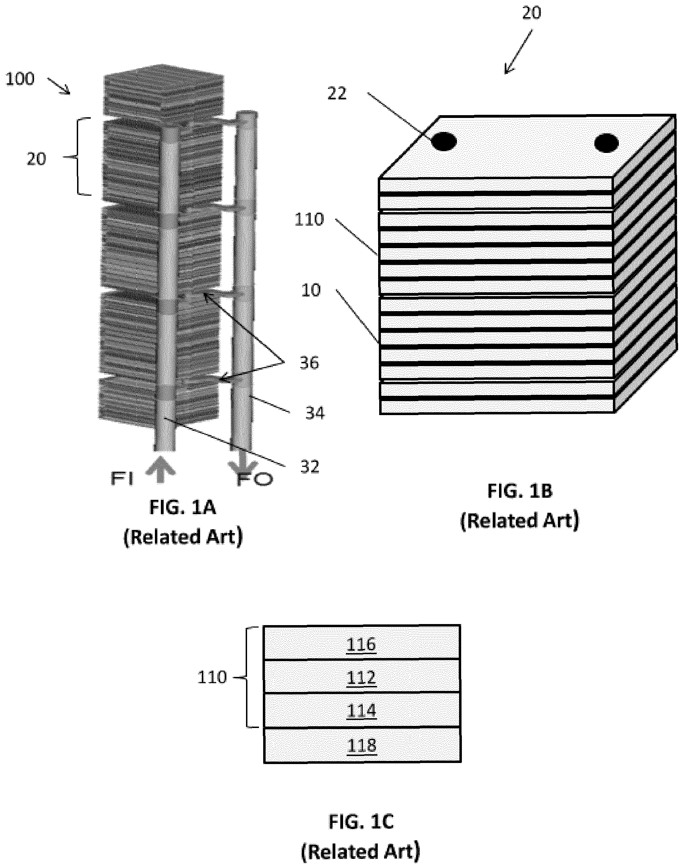

FIG. 1A is a perspective view of an externally manifolded electrochemical cell column 100, FIG. 1B is a perspective view of one counterflow solid oxide electrochemical cell stack 20 included in the column 100 of FIG. 1A, and FIG. 1C is a schematic view of an electrochemical cell 110 of FIG. 1B.

In various embodiments, the column 100 may be described as being operated as a solid oxide fuel cell (SOFC) cell column 100. However, it should be noted that the electrochemical column 100 may also be operated as an electrolyzer column (e.g., a solid oxide electrolyzer cell (SOEC) column). In the SOEC column, the anode is the air electrode and the cathode is the fuel electrode. Thus, the electrode to which the fuel (e.g., hydrogen or hydrocarbon fuel in a SOFC, and water in a SOEC) is supplied may be referred to as the fuel electrode and the opposing electrode may be referred to as the air electrode in both SOFC and SOEC cells.

Referring to FIGS. 1A-1C, the column 100 may include one or more stacks 20, a fuel inlet conduit 32, an anode exhaust conduit 34, and anode feed/return assemblies 36 (e.g., anode splitter plates (ASPs) 36). The column 100 may also include side baffles and a compression assembly (not shown). The fuel inlet conduit 32 is fluidly connected to the ASPs 36 and is configured to provide the fuel feed to each ASP 36, and anode exhaust conduit 34 is fluidly connected to the ASPs 36 and is configured to receive anode fuel exhaust from each ASP 36.

The ASPs 36 are located between the stacks 20 and are configured to provide a fuel feed to the stacks 20 and to receive anode fuel exhaust from the stacks 20. For example, the ASPs 36 may be fluidly connected to internal fuel riser channels 22 formed in the stacks 20, as discussed below.

The stacks 20 include multiple electrochemical cells 110 that are separated by interconnects 10, which may also be referred to as gas flow separator plates or bipolar plates. Each fuel cell 110 may include a solid oxide electrolyte 112, an anode 114, and a cathode 116. In some embodiments, the anode 114 and the cathode 116 may be printed on the electrolyte 112. Alternatively, the electrolyte 112 and the cathode 116 may be formed on the anode 114. In other embodiments, a conductive layer 118, such as a nickel mesh, may be located between the anode 114 and an adjacent interconnect 10. At either end of the column 100, there may be an air end plate or fuel end plate (not shown) for providing air or fuel, respectively, to the end electrode.

Each interconnect 10 electrically connects adjacent fuel cells 110 in the stack 20. In particular, an interconnect 10 may electrically connect the anode 114 of one fuel cell 110 to the cathode 116 of an adjacent fuel cell 110. The interconnects 10 are made from an electrically conductive metal material. For example, the interconnects 10 may comprise a chromium alloy, such as a Cr-Fe alloy. The interconnects 10 may typically be fabricated using a powder metallurgy technique that includes pressing and sintering a Cr-Fe powder, which may be a mixture of Cr and Fe powders or a Cr-Fe alloy powder, to form a Cr-Fe interconnect in a desired size and shape (e.g., a "net shape" or "near net shape" process). A typical chromium-alloy interconnect 10 comprises more than about 90% chromium by weight, such as about 94-96% (e.g., 95%) chromium by weight. An interconnect 200 may also contain less than about 10% iron by weight, such as about 4-6% (e.g., 5%) iron by weight, may contain less than about 2% by weight, such as about zero to 1% by weight, of other materials, such as yttrium or yttria, as well as residual or unavoidable impurities.

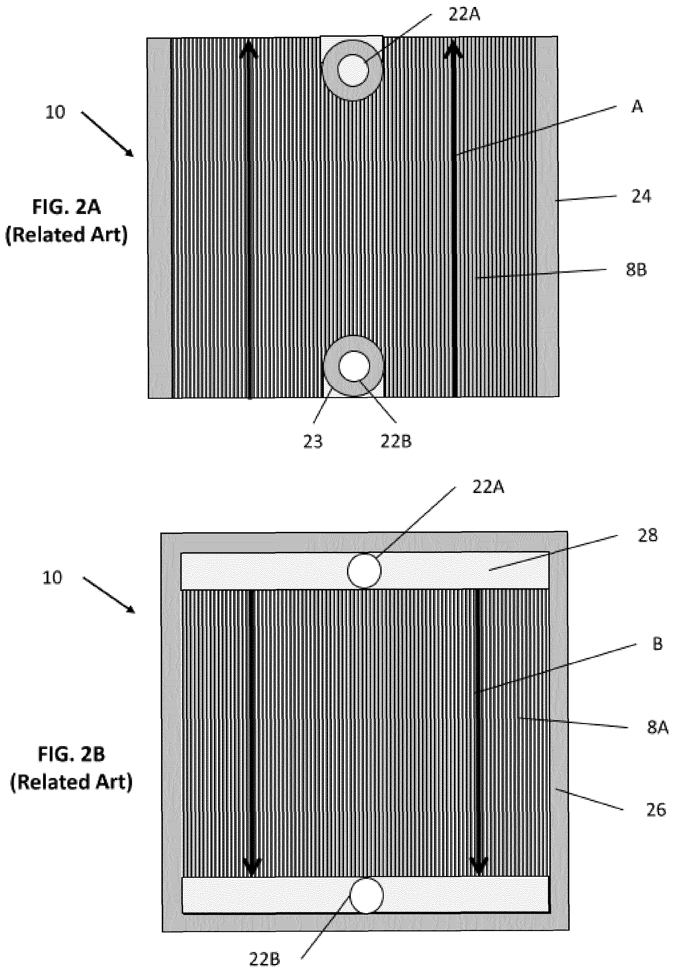

FIG. 2A is a top view of the air side of the counterflow interconnect 10, and FIG. 2B is a top view of a fuel side of the interconnect 10. Referring to FIGS. 1C and 2A, the air side includes the air channels 8B (formed by ribs surrounding the air channels). Air flows through the air channels 8B to a cathode 116 of an adjacent fuel cell 110. In particular, the air may flow across the interconnect 10 in a first direction A as indicated by the arrows.

Ring seals 23 may surround fuel inlet and outlets 22A, 22B of the interconnect 10, to prevent fuel from contacting the cathode electrode. Peripheral strip-shaped seals 24 are located on peripheral portions of the air side of the interconnect 10. The seals 23, 24 may be formed of a glass or a glass-ceramic material. The peripheral portions of the air side of the interconnect 10 may be in the form of an elevated plateau which does not include ribs or channels. The surface of the peripheral regions may be coplanar with tops of the ribs surrounding the air channels 8B.

The air sides of the interconnects 10 may be coated with a protective coating layer in order to decrease the growth rate of a chromium oxide surface layer on the interconnect and to suppress evaporation of chromium vapor species which can poison the fuel cell cathode. Typically, the protective coating layer, which can comprise a perovskite such as lanthanum strontium manganite (LSM), may be formed using a spray coating or dip coating process. Alternatively, other metal oxide coatings, such as a spinel, such as an (Mn, Co)₃O₄ spinel (MCO), can be used instead of or in addition to LSM. Any spinel having the composition Mn₂₋ₓCo₁₊ₓO₄ (0 ≤ x ≤ 1) or written as z(Mn₃O₄) + (1-z)(Co₃O₄), where (1/3 ≤ z ≤ 2/3) or written as (Mn, Co)₃O₄ may be used. In other embodiments, a mixed layer of LSM and MCO, or a stack of LSM and MCO layers may be used as the coating layer.

Referring to FIGS. 1C and 2B, the fuel side of the interconnect 10 may include fuel channels 8A (formed by ribs surrounding the fuel channels) and fuel manifolds 28 (e.g., fuel plenums). Fuel flows out of the fuel inlet 22A into the adjacent manifold 28, through the fuel channels 8A, and to an anode 114 of an adjacent fuel cell 110. Excess fuel may flow into the other fuel manifold 28 and then into the adjacent fuel outlet 22B. In particular, the fuel may flow across the interconnect 10 in a second direction B, as indicated by the arrows. The second direction B may be perpendicular to the first direction A (see FIG. 2A).

A frame-shaped seal 26 is located on a peripheral region of the fuel side of the interconnect 10. The peripheral region of the fuel side of the interconnect 10 may be an elevated plateau which does not include ribs or channels. The surface of the peripheral region may be coplanar with tops of the ribs surrounding the fuel channels 8A.

Accordingly, a counter-flow fuel cell column, as shown in FIGS 1A, 1B, 1C, 2A, and 2B, may include complex fuel distribution systems (fuel rails and anode splitter plates). In addition, the use of an internal fuel riser may require holes in fuel cells and corresponding seals, which may reduce an active area thereof and may cause cracks in the ceramic electrolytes of the cells 110.

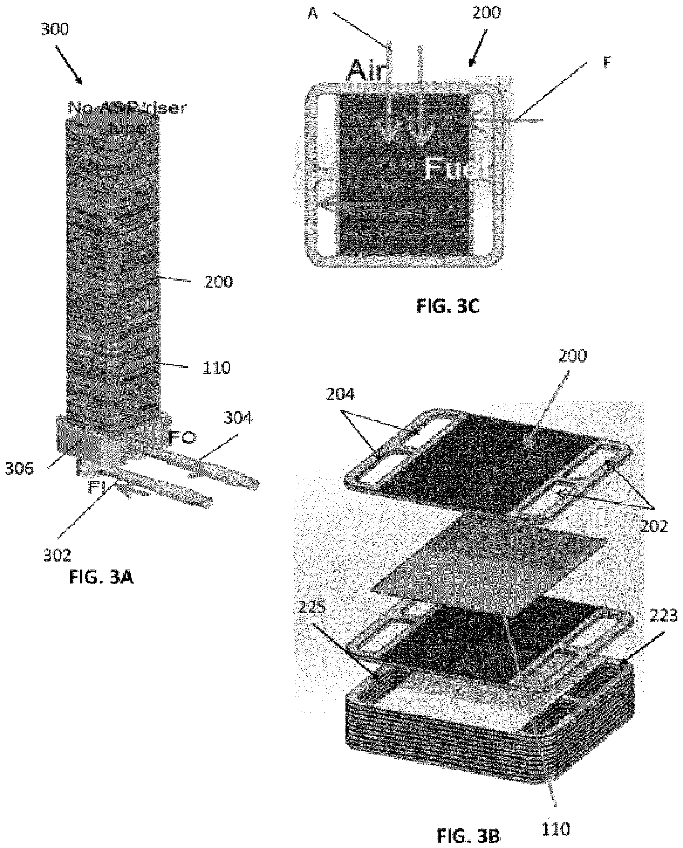

FIG. 3A is a perspective view of an electrochemical cell column 300 that is internally manifolded for fuel, FIG. 3B is an exploded perspective view of a portion of the column 300 of FIG. 3A, and FIG. 3C is a top view of the fuel side of a crossflow interconnect 200 that may be included in the column 300. The column 300 may include similar components to the column 100 of FIGS. 1A-1C. Accordingly, only the differences therebetween will be discussed in detail.

Referring to FIGS. 3A-3C, the cell column 300, which may comprise a single electrochemical cell stack, includes multiple electrochemical cells 110 (e.g., fuel cells or electrolyzer cells) that are separated by interconnects 200, which may also be referred to as gas flow separator plates or bipolar plates. One or more columns 300 may be thermally integrated with other components of a fuel cell power generating system (e.g., one or more anode tail gas oxidizers, fuel reformers, fluid conduits and manifolds, etc.) in a common enclosure or "hotbox."

The interconnects 200 are made from an electrically conductive metal material as discussed above, such as a Cr-Fe alloy.

An upper most interconnect 200 and a lowermost interconnect 200 of the column 300 may be different ones of an air end plate or fuel end plate including features for providing air or fuel, respectively, to an adjacent end fuel cell 110. As used herein, an "interconnect" may refer to either an interconnect located between two cells 110 or an end plate located at an end of the stack and directly adjacent to only one cell 110. Since the column 300 does not include ASP's and the end plates associated therewith, the column 300 may include only two end plates. As a result, stack dimensional variations associated with the use of intra-column ASP's may be avoided.

The column 300 may include a fuel inlet conduit 302, a fuel outlet conduit 304, and a fuel plenum 306. The column 300 may optionally include a compression assembly and side baffles (not shown). The fuel plenum 306 may be located at the bottom of the column 300 and may be configured to provide a fuel feed to the column 300 and may receive an anode fuel exhaust from the column 300. The fuel plenum 306 may be connected to fuel inlet and outlet conduits 302, 304.

Each interconnect 200 electrically connects adjacent fuel cells 110 in the column 300. In particular, an interconnect 200 may electrically connect the anode electrode of one cell 110 to the cathode electrode of an adjacent cell 110. As shown in FIG. 3C, each interconnect 200 may be configured to channel air in a first direction A, such that the air may be provided to the cathode of an adjacent cell 110. In some embodiments, the interconnect 200 may also be configured to channel fuel in a second direction F, such that the fuel may be provided to the anode of an adjacent fuel cell 110. Directions A and F may be perpendicular, or substantially perpendicular. As such, the interconnects 200 may be referred to as crossflow interconnects.

The interconnect 200 may include through-holes configured for fuel distribution. For example, the interconnects 200 may include one or more fuel inlets 202 and one or more fuel outlets 204, which may also be referred to as anode exhaust outlets 204. The fuel inlets and outlets 202, 204 may be located outside of the perimeter of the fuel cells 110. As such, the fuel cells 110 may be formed without corresponding through holes for fuel flow. The combined length of the fuel inlets 202 and/or the combined length of the fuel outlets 204 may be at least 75% of a corresponding length of the interconnect 200 e.g., a length taken in direction A.

The fuel inlets 202 of adjacent interconnects 200 may be aligned in the column 300 to form one or more fuel inlet risers 223. The fuel outlets 204 of adjacent interconnects 200 may be aligned in the column 300 to form one or more fuel outlet risers 225. The fuel inlet riser 223 may be configured to distribute fuel to the fuel cells 110. The fuel outlet riser 225 may be configured to provide anode exhaust received from the fuel cells 110 to the fuel plenum 306.

In various embodiments, the column 300 may include at from about 200 to 400 fuel cells, such as about 250 to 350 fuel cells, more particularly from about 275 to 325 fuel cells, which may be provided with fuel using only the fuel risers 223. The crossflow configuration allows for a large number of fuel cells to be provided with fuel, without the need for ASP's or external stack conduits 32, 34 shown in FIG. 1A.

Each interconnect 200 may be made of or may contain electrically conductive material, such as a metal alloy (e.g., chromium-iron alloy) which has a similar coefficient of thermal expansion to that of the solid oxide electrolyte in the cells 110 (e.g., a difference of 0-10%). For example, the interconnects 200 may comprise a metal (e.g., a chromium-iron alloy, such as 4-6 weight percent iron, optionally 1 or less weight percent yttrium and balance chromium alloy) and may electrically connect the anode or fuel-side of one cell 110 to the cathode or air side of an adjacent fuel cell 110. An electrically conductive contact layer, such as a nickel contact layer (e.g., a nickel mesh), may be provided between the anode and each interconnect 200. Another optional electrically conductive contact layer may be provided between the cathode electrodes and each interconnect 200.

A surface of an interconnect 200 that in operation is exposed to an oxidizing environment (e.g., air), such as the cathode-facing side (air side) of the interconnect 200, may be coated with a protective coating layer in order to decrease the growth rate of a chromium oxide surface layer on the interconnect and to suppress evaporation of chromium vapor species which can poison the fuel cell cathode. Typically, the coating layer, which can comprise a perovskite such as lanthanum strontium manganite (LSM), may be formed using a spray coating or dip coating process. Alternatively, other metal oxide coatings, such as a spinel, such as an (Mn, Co)₃O₄ spinel (MCO), can be used instead of or in addition to LSM. Any spinel having the composition Mn₂₋ₓCo₁₊ₓO₄ (0 ≤ x ≤ 1) or written as z(Mn₃O₄) + (1-z)(Co₃O₄), where (1/3 ≤ z ≤ 2/3) or written as (Mn, Co)₃O₄ may be used. In other embodiments, a mixed layer of LSM and MCO, or a stack of LSM and MCO layers may be used as the coating layer.

While solid oxide fuel cell interconnects, end plates, and electrolytes are described above, alternative embodiments can include any other fuel cell or electrolyzer interconnects or end plates, such as molten carbonate, phosphoric acid or PEM fuel cell or electrolyzer electrolytes, interconnects or end plates.

One potential drawback to pure crossflow interconnects 200, like those illustrated in FIG. 3C, is that they may suffer from large thermal gradients. For example, a first edge on the fuel side of the interconnect 200 is exposed to relatively low temperature fuel from a fuel inlet stream, and an adjacent second edge on the air side of the interconnect 200 is exposed to relatively low temperature air of the air inlet stream. This results in a relatively cool corner where the first and second edges of the interconnect meet. In contrast, a third edge on the fuel side of the interconnect is exposed to relatively hot anode exhaust and an adjacent fourth edge on the air side of the interconnect is exposed to relatively hot air exhaust. This results in a relatively hot corner where the third and fourth edges of the interconnect meet. This temperature variation, in conjunction with relatively little heat exchange between the air and fuel sides, may result in the formation of a significant thermal gradient across the interconnect 200 at diagonally opposing cool and hot corners (e.g., in a diagonal direction across the interconnect).

High thermal gradients may lead to interconnect warping and/or cracking. In addition, high thermal gradients may also reduce fuel utilization rate, thereby reducing column efficiency. Accordingly, embodiments of the present disclosure provide partial counterflow interconnects that reduce thermal gradients. The partial counterflow interconnects provide multidirectional fuel paths which are partly opposite to the air flow paths and partly perpendicular to the air flow paths (i.e., which include fuel paths which are both perpendicular and opposite to the air flow paths). The partial counterflow air and fuel paths reduce the temperature gradients by reducing or eliminating the cool and hot corner effects described above by providing a hot air exhaust on the opposite side of the area of the interconnect where the cool fuel inlet stream enters.

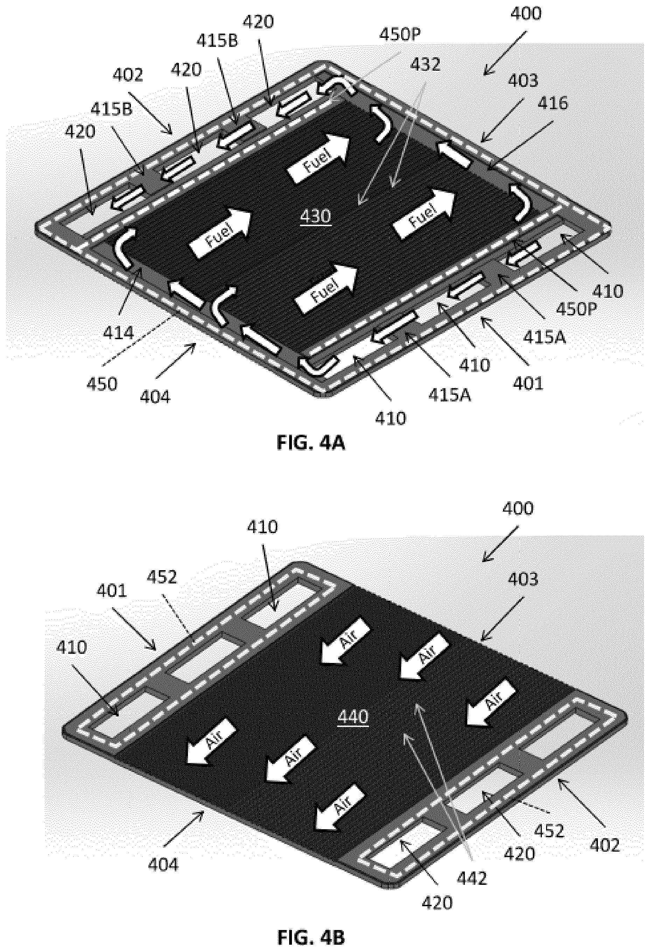

FIG. 4A is a perspective view of a fuel side of a partial counterflow interconnect 400, according to various embodiments of the present disclosure, which may be included in the column of FIG. 3A, and FIG. 4B is a perspective view of the air side of the interconnect 400 of FIG. 4A.

Referring to FIG. 4A, the interconnect 400 may be used in a cell column that is internally manifolded for fuel and externally manifolded for air, as discussed above. The interconnect 400 has a first peripheral edge 401, an opposing second peripheral edge 402, a third peripheral edge 403, and an opposing fourth peripheral edge 404. The interconnect 400 may include fuel inlets 410 formed along the first edge 401, fuel outlets 420 formed along the second edge 402. Adjacent inlets 410 may be separated by neck regions 415A. Similarly, adjacent outlets 420 may be separated by neck regions 415B. The neck regions 415A, 415B may be configured to increase the structural stability of the interconnect 400 adjacent to the inlets and outlets 410, 420. While three fuel inlets 410 and three fuel outlets 420 are shown in FIGS. 4A and 4B, the interconnect 400 may have fewer or greater numbers of fuel inlet and/or outlets 410, 420.

The fuel side of the interconnect 400 may include a fuel inlet manifold 414 formed along the fourth edge 404, a fuel outlet manifold 416 formed along the third edge 403, and a fuel field 430 located there between. The fuel field 430 may include fuel channels 432 that extend from the fuel inlet manifold 414 to the fuel outlet manifold 416. The fuel channels 432 are separated by fuel side ribs (described above). The fuel inlet manifold 414 may fluidly connect the fuel inlets 410 to first ends of the fuel channels 432, and the fuel outlet manifold 416 may fluidly connect the fuel outlets 420 to opposing second ends of the fuel channels 432. The fuel channels 432 extend in a first direction from the fourth edge 404 to the third edge 403 of the interconnect 400, which is perpendicular to a second direction extending from the first edge 401 containing the fuel inlets 410 to the second edge 402 containing the fuel outlets 420.

The fuel side of the interconnect 400 may also include a fuel side seal surface 450 configured to receive a glass or glass-ceramic seal material which forms the peripheral seal described above. The fuel side seal surface 450 may include surfaces located adjacent to all four of the edges 401, 402, 403, 404. Portions 450P of the fuel side seal surface 450 may optionally extend between the fuel field 430 and the inlets and outlets 410, 420 to block fuel from flowing directly from the fuel inlets 410 into the fuel channels 432, and to block the fuel exhaust from flowing directly from the fuel channels 432 to the outlets 420. The fuel side seal surface 450 may be a planar surface and the manifolds 414, 416, the fuel side surfaces of the neck regions 415A, 415B, and/or the bottoms of the fuel channels 432 may be recessed below the fuel side seal surface 450.

When utilized in the cell column 300 of FIG. 3A, fuel flows from the fuel inlets 410 across the neck regions 415A toward the fourth edge 404 and enters the fuel inlet manifold 414. In particular, the fuel may flow across the neck regions 415A located between the fuel inlets 410, such that the fuel inlets 410 are fluidly connected and operate as a single fuel plenum.

Fuel flows through the fuel inlet manifold 414 in a first direction toward the second edge 402. Fuel enters the fuel field 430 from the fuel manifold 414. In particular, the fuel inlet manifold 414 may distribute the fuel to the fuel channels 432 of the fuel field 430. Fuel flows in a second direction perpendicular to the first direction through the fuel channels 432 toward the third edge 403. Fuel exhaust (e.g., anode exhaust) and unspent fuel flows out of the fuel channels 432 and exits the fuel field 430, where the fuel is collected by the fuel outlet manifold 416 at the third edge 403. The fuel outlet manifold 416 directs the fuel along the first direction toward the second edge 402, and then into the fuel outlets 420. In particular, the fuel may flow across the neck regions 415 between the fuel outlets 420, such that the fuel outlets 420 are fluidly connected and operate as a single fuel plenum for collecting the unspent fuel and fuel exhaust.

A seal material (not shown) may be located on the fuel side seal surface 450 to prevent fuel from escaping the column and/or from flowing into or out of the fuel field 430 without passing through the manifolds 414, 416.

Referring to FIG. 4B, the air side of the interconnect 400 may include an air field 440 comprising air channels 442 that extend from the third edge 403 to the fourth edge 404, and air side seal surfaces 452 surrounding the fuel inlets and outlets 410, 420. When utilized in an electrochemical cell column, air may flow across the air field 440 and through the air channels 442 in a third direction, from the third edge 403 to the fourth edge 404 of the interconnect 400. The third direction may be opposite to the second direction. As such, the fuel and air may flow across the partial crossflow interconnect 400 in opposite directions, such that the interconnect 400 has a primarily counterflow configuration, with a secondary crossflow configuration when the fuel flows through the manifolds 414, 416. A glass or glass-ceramic seal material may be located on the air side seal surfaces 452 to prevent fuel from escaping from the fuel inlets and outlets 410, 420 and/or cell column.

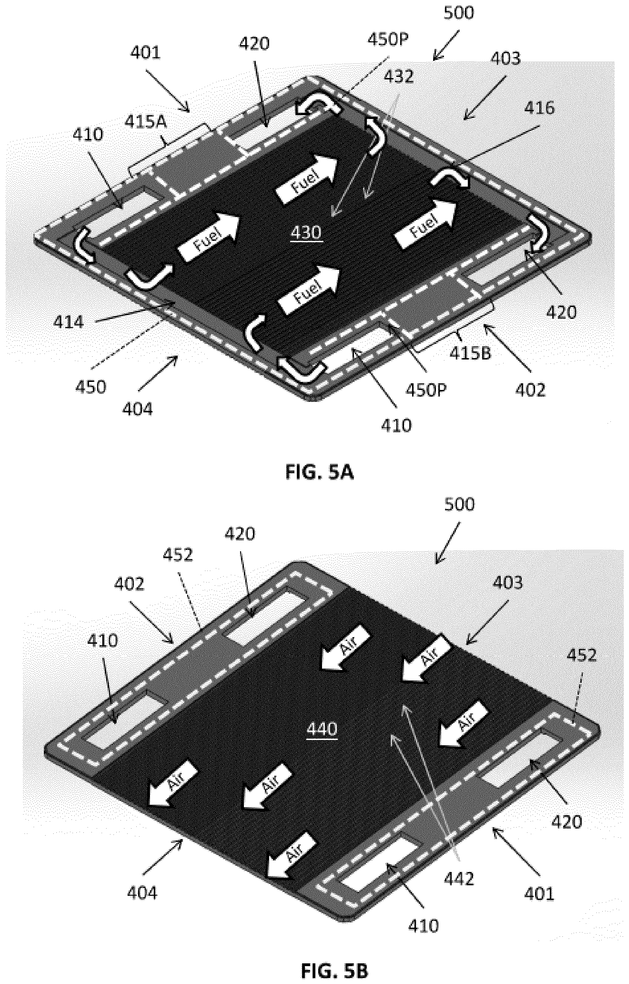

FIG. 5A is a perspective view of another partial counterflow interconnect 500, according to various embodiments of the present disclosure, and FIG. 5B is a perspective view of the air side of the interconnect 500 of FIG. 5A. The interconnect 500 may be similar to the interconnect 400. As such, only the differences there between will be discussed in detail.

Referring to FIG. 5A, the interconnect 500 may include a first fuel inlet 410 and a first fuel outlet 420 formed adjacent to the first edge 401, and a second fuel inlet 410 and a second fuel outlet 420 formed adjacent to the second edge 402. Thus, the first and second fuel inlets 410 are located closer to the fourth edge 404 than to the third edge 403 of the interconnect 500, while the first and second fuel outlets 420 are located closer to the third edge 403 than to the fourth edge 404 of the interconnect 500. The fuel side of the interconnect 500 may include an inlet manifold 414 fluidly connecting the fuel inlets 410 and an outlet manifold 416 fluidly connecting the fuel outlets 420.

The first neck region 415A separates the first fuel inlet 410 from the first fuel outlet 420 on the first edge 401 of the interconnect 500. The first neck region 415A comprises a raised region which acts as a barrier to prevent the fuel from flowing directly from the first fuel inlet 410 into the first fuel outlet 420. The second neck region 415B separates the second fuel inlet 410 from the second fuel outlet 420 on the second edge 402 of the interconnect 500. The second neck region 415B comprises a raised region which acts as a barrier to prevent the fuel from flowing directly from the second fuel inlet 410 into the second fuel outlet 420.

When utilized in the cell column 300 of FIG. 3A, fuel from the fuel inlets 410 flows into the fuel inlet manifold 414, and into the fuel field 430. In particular, the fuel flows into the inlet manifold 414 from two directions (e.g., from both of the first edge 401 and the second edge 402) toward the center of the inlet manifold 414. The inlet manifold 414 distributes the fuel to the fuel channels 432 in the fuel field 430. The fuel flows through the fuel field 430 in the first direction toward the third edge 403 and enters the fuel outlet manifold 416. Fuel flows out of the outlet manifold 416 in two directions perpendicular to the first direction, toward the first and second edges 401, 402, and then into the first and second fuel outlets 420.

A seal material may be located on a fuel side seal surface 450 that extends around the perimeter of the interconnect 500. In some embodiments, portions 450P of the fuel side seal surface 450 may extend between the fuel field 430 and the fuel inlets and outlets 410, 420 and some or all of the fuel side surfaces of the neck regions 415, in order to prevent fuel from escaping from the fuel field 430 and/or bypassing the manifolds 414, 416.

Referring to FIG. 5B, the air side of the interconnect 500 may include raised air side seal surfaces 452 that surround the fuel inlets and outlets 410, 420 at each of the first and second edges 401, 402. When incorporated in the cell column 300, air flows onto the interconnect 500 from the third edge 403 and enters the air field 440. Air flows through the air channels 442 in the air field 440 in a second direction opposite to the first direction, and then exits the air field 440 at the fourth edge 404. The fuel and air may flow across the partial crossflow interconnect 500 in opposite directions, such that the interconnect 500 has a primarily counterflow configuration, with a secondary crossflow configuration when the fuel flows through the manifolds 414, 416.

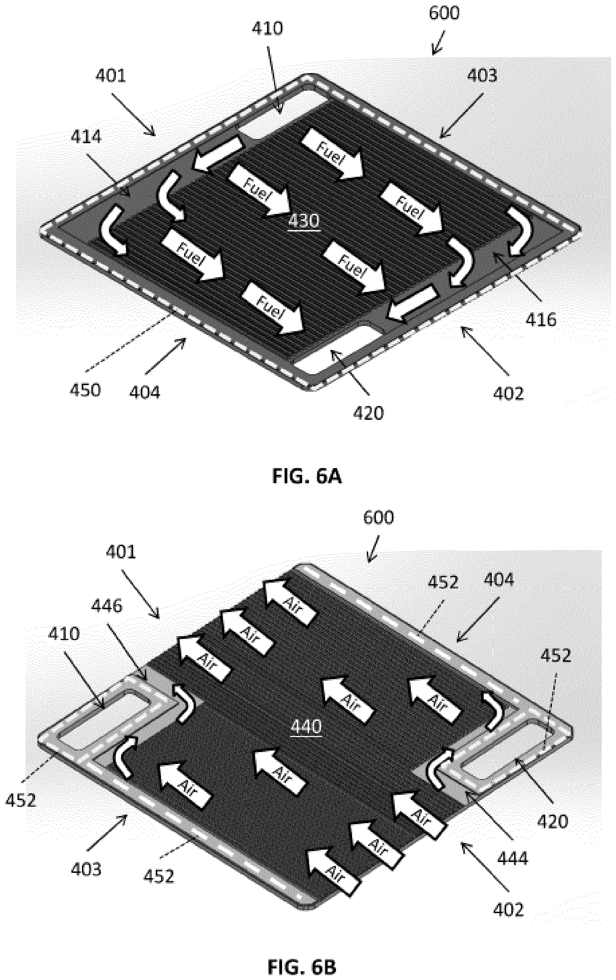

FIG. 6A is a perspective view of the fuel side of a partial counterflow interconnect 600, according to various embodiments of the present disclosure, and FIG. 6B is a perspective view of the air side of the interconnect 600 of FIG. 6A. The interconnect 600 may be similar to the interconnect 400. As such, only the differences there between will be discussed in detail.

Referring to FIG. 6A, the interconnect 600 may include a fuel inlet 410 and a fuel inlet manifold 414 formed adjacent to the first edge 401, and a fuel outlet 420 and a fuel outlet manifold 416 formed adjacent to the second edge 402. In particular, the fuel inlet and outlets 410, 420 may be located adjacent to diagonally opposing corners of the interconnect 400.

When utilized in the cell column 300 of FIG. 3A, fuel from the fuel inlet 410 flows into the fuel inlet manifold 414, which directs the fuel toward the fourth edge 404 in the third direction. Fuel flows from the fuel inlet 410 and the fuel inlet manifold 414 into the fuel field 430, which directs the fuel in the fourth direction (which is perpendicular to the third direction) toward the second edge 402. Fuel flows out of the fuel field 430 and into the fuel outlet 420 and the fuel outlet manifold 416. The fuel outlet manifold 416 directs the fuel in the third direction toward the fourth edge 404 and into the fuel outlet 420.

Referring to FIG. 6B, the air side of the interconnect 600 may include an air inlet manifold 444 located adjacent to two sides of the fuel outlet 420, an air outlet manifold 446 located adjacent to two sides the fuel inlet 410, and raised air side seal surfaces 452 that surround all sides of the fuel inlets and outlets 410, 420. In some embodiments, the air side seal surfaces 452 may optionally extend along the third and fourth edges 403, 404. Bottom surfaces of the air inlet manifold 444 and the air outlet manifold 446 are recessed with respect to the air side seal surfaces 452.

A first group of air channels (e.g., those on the left side of FIG. 6B) extend from the second peripheral edge 402 of the interconnect 600 to a location spaced from the first peripheral edge 401 of the interconnect by a distance in the second direction (i.e., the direction from the first peripheral edge to the second peripheral edge) which is greater than the length in the second direction of the fuel side seal surface 452 surrounding the fuel inlet 410. A second group of air channels (e.g., those on the right side of FIG. 6B) extend from the first peripheral edge 401 of the interconnect 600 to a location spaced from the second peripheral edge 402 of the interconnect by a distance in the second direction (i.e., the direction from the first peripheral edge to the second peripheral edge) greater than the length in the second direction of the fuel side seal surface 452 surrounding the fuel outlet 420. A third group (e.g., portion) of the air channels (e.g., those in the middle of FIG. 6B) extend from the first peripheral edge 401 of the interconnect to the second peripheral edge 402 of the interconnect 600.

When utilized in the cell column 300 of FIG. 3A, air flows into the air field 440 from the second edge 402 and exits the air field 440 at the first edge 401. The air inlet manifold 444 may direct air from the second edge 402, around the fuel outlet 420, and into the portion of the air field 440 located adjacent to the fuel outlet 420. The air outlet manifold 446 may direct air received from a portion of the air field 440 located adjacent to the fuel inlet 410 and to the first edge 401. A seal material may be located on the seal surfaces 452 around the fuel inlets and outlets 410, 420 and/or along the third and fourth edges 403, 404. The interconnect 600 is also internally manifolded for fuel and externally manifolded for air, and has a primarily counterflow configuration (fuel flowing primarily in the fourth direction and air flowing primarily in the first direction) and a secondary crossflow configuration where air in portions of the air manifolds 444, 446 flows perpendicular (in the second direction) to the fuel flow direction.

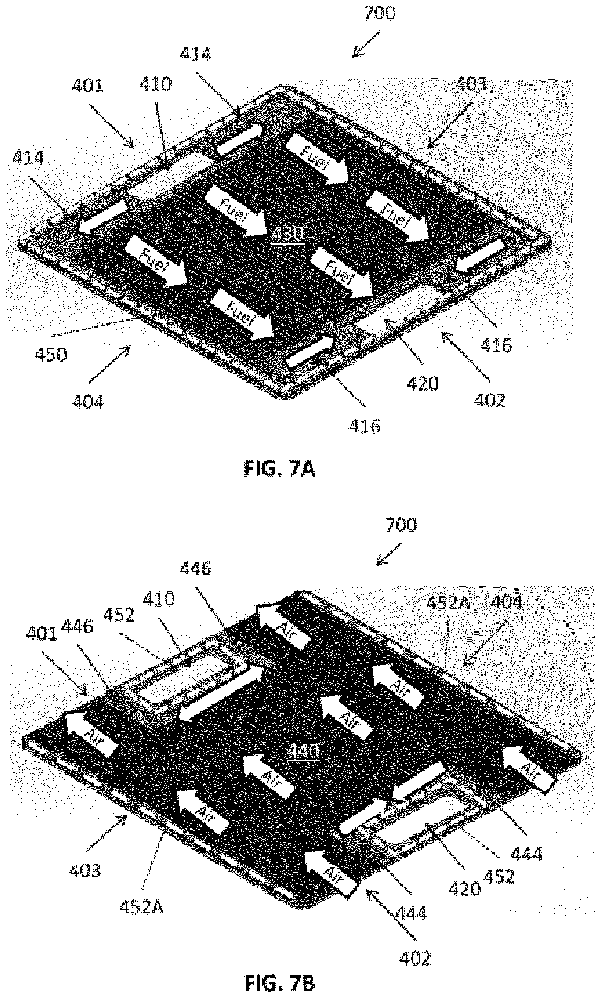

FIG. 7A is a perspective view of the fuel side of a partial counterflow interconnect 700, according to various embodiments of the present disclosure, and FIG. 7B is a perspective view of the air side of the interconnect 700 of FIG. 7A. The interconnect 700 may be similar to the interconnect 600. As such, only the differences there between will be discussed in detail.

Referring to FIG. 7A, the interconnect 700 may include a fuel inlet 410 and a fuel inlet manifold 414 located adjacent to the first edge 401, and a fuel outlet 420 and a fuel outlet manifold 416 located adjacent to the second edge 402. In particular, the fuel inlet 410 may be located in the middle of the fuel inlet manifold 414 (i.e., between two portions of the fuel inlet manifold 414), adjacent to the middle of the first edge 401, and the fuel outlet 420 may be located in the middle of the fuel outlet manifold 416 (i.e., between two portions of the fuel outlet manifold 416), adjacent to the middle of the second edge 402.

When utilized in the cell column 300 of FIG. 3A, fuel from the fuel inlet 410 flows into the fuel field 430, either directly from the fuel inlet 410 or after flowing through the fuel inlet manifold 414 toward the third and fourth edges 403, 404. Fuel flows through the fuel field 430 toward the second edge 402 and directly enters the fuel outlet 420 or enters the fuel outlet manifold 416. Fuel in the fuel outlet manifold 416 flows into the fuel outlet 420.

Referring to FIG. 7B, the interconnect 700 may include an air inlet manifold 444 that is located adjacent to at least three sides of the fuel outlet 420, and an air outlet manifold 446 that is located adjacent to at least three sides of the fuel inlet 410. The air side may also include raised air side seal surfaces 452 that surround all sides of the fuel inlets and outlets 410, 420. Bottom surfaces of the air inlet manifold 444 and the air outlet manifold 446 are recessed with respect to the air side seal surfaces 452. Portions 452A of the air side seal surfaces 452 may optionally extend along the third and fourth edges 403, 404 on opposing sides of the air field 440.

When incorporated into the cell column 300, air enters the air field 440 and the air inlet manifold 444 from the second edge 402. The air inlet manifold 444 directs the air around the fuel outlet 420 and into a central portion of the air field 440, between the fuel inlet and outlets 410, 420. Air flows through the air field 440 toward the first edge 401 in the first direction. Air either flows directly out of the air field 440 at the first edge 401 or enters the air outlet manifold 446. The air outlet manifold 446 directs the air around the fuel inlet 410 and to the first edge 401. The interconnect 700 is internally manifolded for fuel and externally manifolded for air, and has a primarily counterflow configuration and a secondary crossflow configuration where portions of air in the air manifolds 444, 446 flow perpendicular to the fuel flow direction.

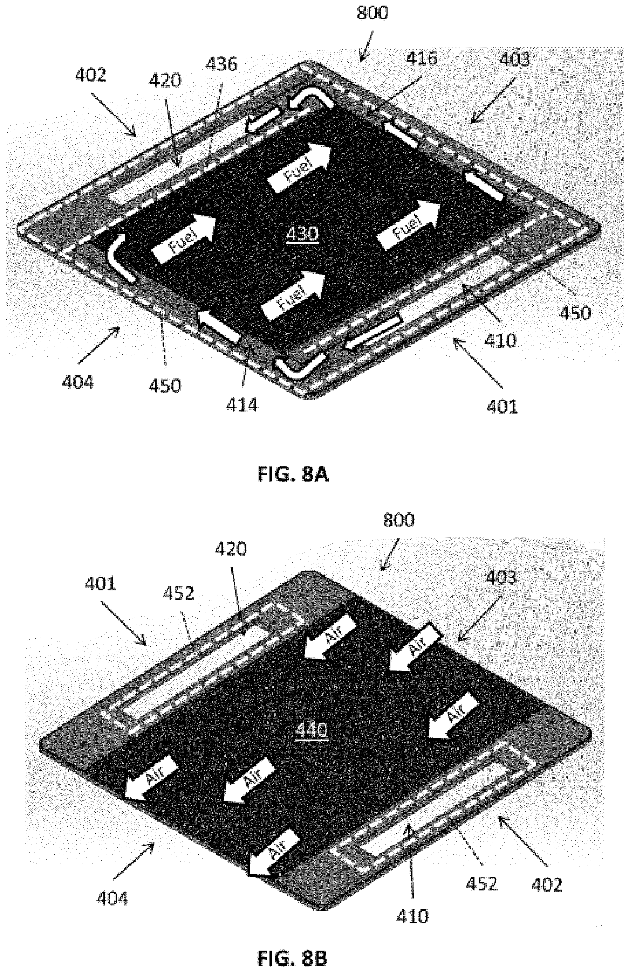

FIG. 8A is a perspective view of the fuel side of a partial counterflow interconnect 800, according to various embodiments of the present disclosure, and FIG. 8B is a perspective view of the air side of the interconnect 800 of FIG. 8A. The interconnect 800 may be similar to the interconnect 500. As such, only the differences there between will be discussed in detail.

Referring to FIG. 8A, the interconnect 800 may include a fuel inlet 410 formed adjacent to the first edge 401, and a fuel outlet 420 formed adjacent to the second edge 402. The interconnect 800 may also include fuel inlet manifold 414 that fluidly connects the fuel inlet 410 to the fuel field 430, and a fuel outlet manifold 416 that fluidly connects the fuel field 430 to the fuel outlet 420. The fuel inlet and outlets 410, 420 may be elongated. For example, a length of the fuel inlet and outlets 410, 420 may be at least 50% of the length of the first and second edges 401, 402.

When utilized in the electrochemical cell column 300 of FIG. 3A, fuel provided to the fuel inlet 410 enters the fuel inlet manifold 414, which directs the fuel toward the second edge 402. Fuel may flow out of the fuel inlet manifold 414 and into the fuel field 430. Fuel flows through the fuel field 430 toward the third edge 403 and then enters the fuel outlet manifold 416. A seal material may be located on the fuel side seal surface 450. In some embodiments, the fuel side seal surface 450 may optionally extend between the fuel field 430 and the fuel inlets and outlets 410, 420 (e.g., seal surface 436), in order to prevent fuel from escaping and/or entering sides of the fuel field 430.

Referring to FIG. 8B, the interconnect 800 includes air side seal surfaces 452 located adjacent to the first and second edges 401, 402. The air side seal surfaces 452 may extend from the third edge 403 to the fourth edge 404. When incorporated into a cell column, air provided to the third edge 403 enters the air field 440 and flows toward the fourth edge 404.

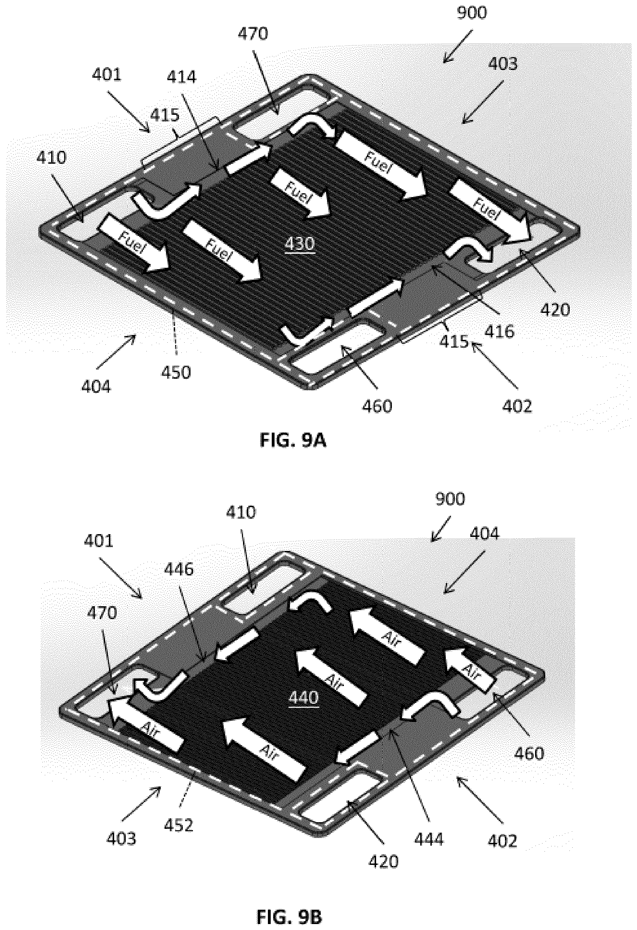

FIG. 9A is a perspective view of the fuel side of a partial counterflow interconnect 900, according to various embodiments of the present disclosure, and FIG. 9B is a perspective view of the air side of the interconnect 900 of FIG. 9A. The interconnect 900 may be similar to the interconnect 500. As such, only the differences there between will be discussed in detail.

Referring to FIG. 9A, the fuel side of the interconnect 900 includes a fuel inlet 410 and an air outlet 470 formed adjacent to the first edge 401 and separated by a neck region 415, and a fuel outlet 420 and an air inlet 460 formed adjacent to the second edge 402 and separated by another neck region 415. The neck regions 415 comprise raised regions which prevent fuel flow from the fuel inlet 410 into the air outlet 470, and fuel exhaust flow from the fuel outlet 420 into the air inlet 460. The fuel inlet 410, the fuel outlet 420, the air inlet 460 and the air outlet 470 are located adjacent to respective corners of the interconnect 900. The interconnect 900 also includes a fuel inlet manifold 414 fluidly connecting the fuel inlet 410 to the fuel field 430, and a fuel outlet manifold 416 fluidly connecting the fuel outlet 420 to the fuel field 430.

When utilized in the electrochemical cell column 300 of FIG. 3A, fuel from the fuel inlet 410 enters the fuel inlet manifold 414, which distributes the fuel to the fuel field 430. Fuel flows through the fuel field 430 toward the second edge 402 and enters the fuel outlet manifold 416, which directs the fuel to the fuel outlet 420. A seal material may be located on a fuel side seal surface 450 to seal the perimeter of the interconnect 400 and to internally seal the air inlet and outlet 460, 470. The fuel side seal surface 450 may include portions of the fuel side that internally surround the air inlet and outlet 460, 470.

Referring to FIG. 9B, the air side of the interconnect 900 includes an air inlet manifold 444 that fluidly connects the air inlet 460 to the air field 440, and an air outlet manifold 446 that fluidly connects the air field 440 to the air outlet 470. When incorporated into the cell column 300, air from the air inlet 460 flows into the air inlet manifold 444 and is distributed to the air field 440. Air flows through the air field 440 toward the first edge 401 and enters the air outlet manifold 446, which directs the air into the air outlet 470. A seal material may be located on an air side seal surface 452 to seal the perimeter of the interconnect 900 and to internally seal the fuel inlets and outlets 410, 420. For example, the air seal surface 452 may include surfaces of the air side of the interconnect 900 that surround the fuel inlets and outlets 410, 420.

In various embodiments, the interconnect 900 may be utilized in a cell column that includes internal fuel riser channels that are at least partially defined by the fuel inlet and outlets 410, 420, and internal air riser channels that are at least partially defined by the air inlets and outlets 460, 470. Accordingly, interconnect 900 may be used to form a cell column that is internally manifolded for both fuel and air.

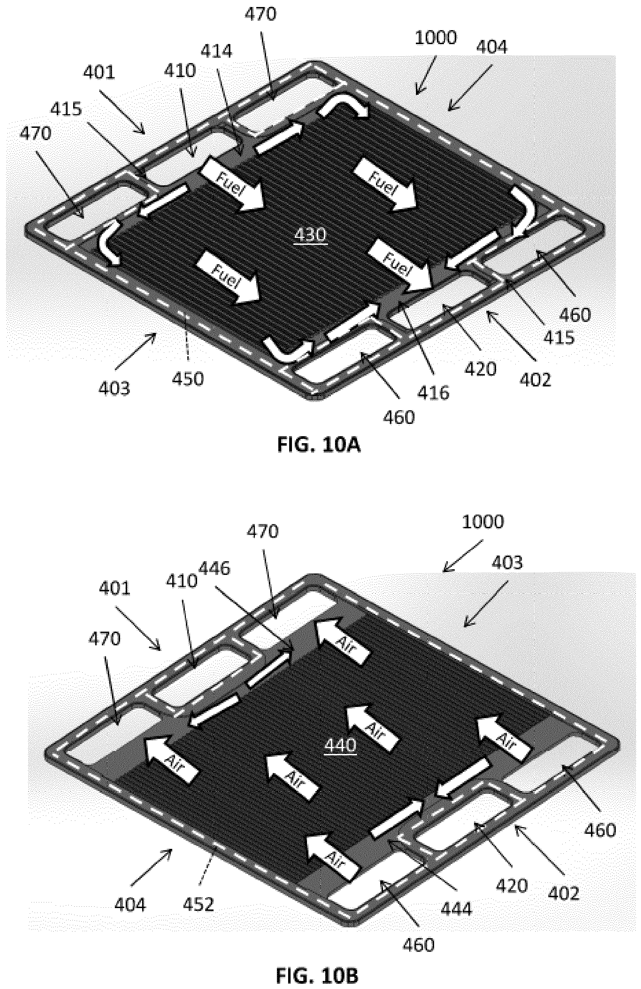

FIG. 10A is a perspective view of the fuel side of a partial counterflow interconnect 1000, according to various embodiments of the present disclosure, and FIG. 10B is a perspective view of the air side of the interconnect 1000 of FIG. 10A. The interconnect 1000 may be similar to the interconnect 900. As such, only the differences there between will be discussed in detail.

Referring to FIG. 10A, the interconnect 1000 includes one fuel inlet 410 formed adjacent to a middle of the first edge 401, and one fuel outlet 420 formed adjacent to a middle the second edge 402. The interconnect 1000 also includes two air outlets 470 formed on opposing sides of the fuel inlet 410 and two air inlets 460 formed on opposing sides of the fuel outlet 420. The air inlets 460 and outlets 470 are located at respective corners of the interconnect 1000. The fuel inlet 410 is separated from the air outlets 470 by raised neck regions 415, and the fuel outlet 420 is separated from the air inlets 460 by additional raised neck regions 415. The neck regions 415 comprise raised regions which prevent fuel flow from the fuel inlet 410 into the air outlets 470, and fuel exhaust flow from the fuel outlet 420 into the air inlets 460. The interconnect 1000 also includes a fuel inlet manifold 414 fluidly connecting the fuel inlet 410 to the fuel field 430, and a fuel outlet manifold 416 fluidly connecting the fuel outlet 420 to the fuel field 430.

When the interconnect 900 is utilized in the electrochemical cell column 300 of FIG. 3A, fuel from the fuel inlet 410 enters the fuel inlet manifold 414, which distributes the fuel to the fuel field 430. Fuel flows through the fuel field 430 toward the second edge 402. Fuel flows out of the fuel field 430 and enters the fuel outlet manifold 416, which directs the fuel to the fuel outlet 420. A seal material may be located on a fuel side seal surface 450 to seal the perimeter of the interconnect 1000 and to internally seal the air inlets and outlets 460, 470. For example, the fuel side seal surface 450 may include portions of the fuel side that internally surround the air inlets and outlets 460, 470.

Referring to FIG. 10B, the air side of the interconnect 1000 includes an air inlet manifold 444 that fluidly connects the air inlets 460 to the air field 440, and an air outlet manifold 446 that fluidly connects the air field 440 to the air outlets 470. Air from the air inlets 460 is distributed to the air field 440 by the air inlet manifold 444, flows through the air field 440 to the air outlet manifold 446, which directs the air into the air outlets 470. A seal material may be located on an air seal surface 452 to seal the perimeter of the interconnect 1000 and to internally seal the fuel inlet 410 and fuel outlet 420. For example, the air seal surface 452 may include surfaces of the air side that surround the fuel inlet 410 and fuel outlet 420.

When the interconnect 1000 is utilized in the electrochemical cell column 300 of FIG. 3A, the column 300 may include internal fuel riser channels that are at least partially defined by the fuel inlet 410 and fuel outlet 420, and internal air riser channels that are at least partially defined by the air inlets and outlets 460, 470. Accordingly, the column 300 may be internally manifolded for both fuel and air.

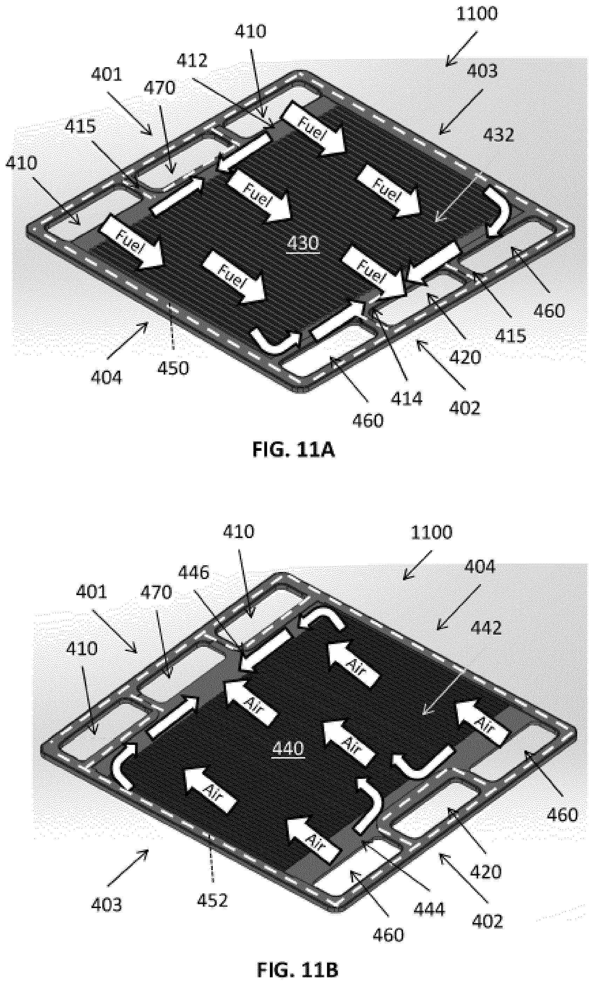

FIG. 11A is a perspective view of the fuel side of a partial counterflow interconnect 1100, according to various embodiments of the present disclosure, and FIG. 11B is a perspective view of the air side of the interconnect 1100 of FIG. 11A. The interconnect 1100 may be similar to the interconnect 1000. As such, only the differences there between will be discussed in detail.

Referring to FIG. 11A, the fuel side of the interconnect 1100 includes two fuel inlets 410 and one air outlet 470 located adjacent to the first edge 401, and one fuel outlet 420 and two air inlets 460 located adjacent to the second edge 402. The air outlet 470 and the fuel outlet 420 are located adjacent to a middle of the respective first edge 401 and the second edge 402 of the interconnect 1100. The fuel inlets 410 and the fuel outlets 420 are located are located at respective corners of the interconnect 1100. The fuel inlets 410 are separated from the air outlet 470 by raised neck regions 415, and the fuel outlet 420 is separated from the air inlets 460 by additional raised neck regions 415. The neck regions 415 comprise raised regions which prevent fuel flow from the fuel inlets 410 into the air outlet 470, and fuel exhaust flow from the fuel outlet 420 into the air inlets 460. The interconnect 1100 also includes a fuel inlet manifold 412 that fluidly connects the fuel inlets 410 to first ends of the fuel channels 432, and a fuel outlet manifold 414 that fluidly connects second ends of the fuel channels 432 to the fuel outlet 420. A fuel side seal surface 450 may extend along the edges 401, 402, 403, 404 of the interconnect 1100 and may also surround the air inlets 460 and the air outlet 470.

Referring to FIG. 11B, the air side of the interconnect 1100 includes an air inlet manifold 444 that fluidly connects the air inlets 460 to first ends of the air channels 442, and an air outlet manifold 446 that fluidly connects the air outlet 470 to second ends of the air channels 442. An air side seal surface 452 may extend along the edges 401, 402, 403, 404 of the interconnect 1100 and may also surround the fuel inlets 410 and the fuel outlet 420. Thus, the interconnect 1100 differs from the interconnect 1000 in that there are plural fuel and air inlets and outlets, and one air outlet and one fuel outlet. Otherwise, the fuel and air flows in interconnects 1000 and 1100 are similar.

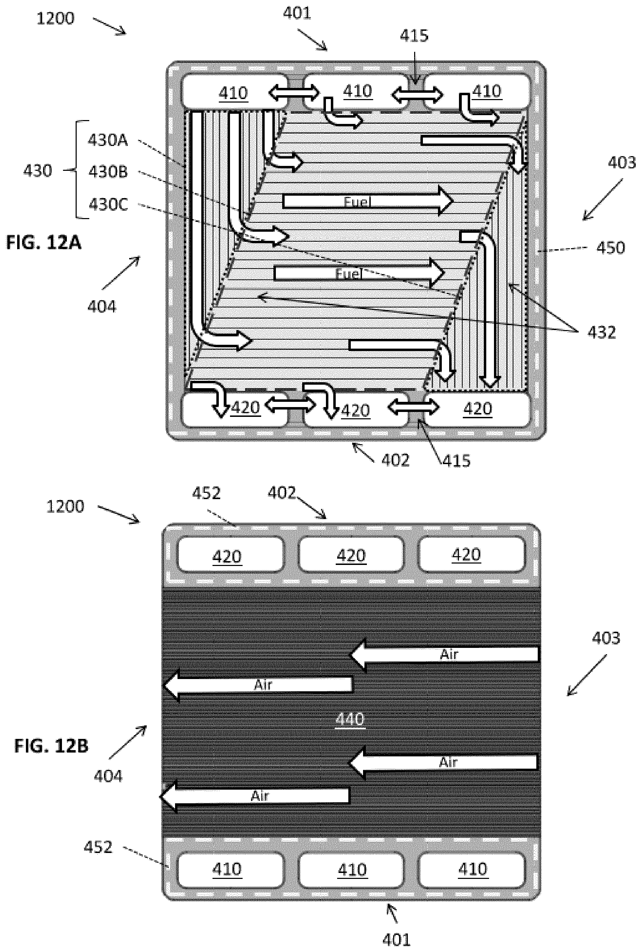

FIG. 12A is a perspective view of the fuel side of a partial counterflow interconnect 1200, according to various embodiments of the present disclosure, and FIG. 12B is a perspective view of the air side of the interconnect 1200 of FIG. 12A. The interconnect 1200 may be similar to the interconnect 400. As such, only the differences there between will be discussed in detail.

Referring to FIG. 12A, the fuel side of the interconnect 1200 includes fuel inlets 410 formed adjacent to the first edge 401, and fuel outlets 420 formed adjacent to the second edge 402. The fuel field 430 includes fuel channels 432 that are configured to direct fuel in at least two different directions as the fuel flows across the fuel field 430. The fuel inlets 410 are separated from each other by neck regions 415. The fuel outlets are separated from each other by additional neck regions 415. In this embodiment, the neck regions 415 comprise recessed regions (e.g., which may have a height similar to that of the fuel channels 432 and less than a height of the fuel ribs which separate adjacent fuel channels 432). Thus, in this embodiment, the fuel may flow laterally between adjacent fuel inlets 410 over the neck regions 415, and the fuel exhaust may flow laterally between adjacent fuel outlets 420 over the additional neck regions 415. The fuel side surfaces of the neck regions 415 are recessed with respect to the fuel side seal surface 450.

The fuel field 430 may be divided into a first region 430A, a second region 430B, and a third region 430C. The second region 430B is located between the first region 430A and the third region 430C. The second region 430B may have a shape of a rhomboid (e.g., parallelogram with two acute and two obtuse angles), while the first region 430A and the third region 430C may have a shape of a right triangle. The fuel channels 432 in the second region 430B may extend in a first direction. The fuel channels 432 in the first region 430A and the third region 430C may extend in a second direction which is perpendicular to the first direction.

When incorporated into a fuel cell column, fuel output from the fuel inlets 410 may be provided to the fuel channels 432 of the first region 430A and may flow in the second direction towards the second edge 402. Fuel may be provided to channels 432 of the second region 430B from the first region 430A or directly from the fuel inlets 410. Fuel flows through the second region 430B in the first direction that may be perpendicular to the second direction. Fuel exiting the second region 430B may be provided to channels 432 of the third region 403C or may flow directly into the fuel outlets 420. Fuel in the third region 430C may again flow in the second direction and be provided to the fuel outlets 420. Accordingly, the fuel field 430 may be configured to direct fuel in at least two different (e.g., perpendicular) directions, as the fuel flows from the fuel inlets 410 to the fuel outlets 420.

Referring to FIG. 12B, the air side of the interconnect 1200 may be the same as that of the interconnect 400.

Referring to FIGS. 12A and 12B, when utilized in the electrochemical cell column 300 of FIG. 3A, the fuel may flow through the fuel field 430 in a direction perpendicular to the air flow direction and in a direction opposite to the air flow direction. As such, the interconnect 1200 has a partial counterflow design with two crossflow components.

Fuel cell systems incorporating the interconnects and columns of the present disclosure are beneficial to the climate by reducing greenhouse gas emissions.

The foregoing descriptions are provided merely as illustrative examples and are not intended to require or imply that the steps of the various embodiments must be performed in the order presented. As will be appreciated by one of skill in the art, the order of steps in the foregoing embodiments may be performed in any order. Words such as "thereafter," "then," "next," etc. are not necessarily intended to limit the order of the steps; these words may be used to guide the reader through the description of the methods. Further, any reference to claim elements in the singular, for example, using the articles "a," "an" or "the" is not to be construed as limiting the element to the singular.

The preceding description of the disclosed aspects is provided to enable any person skilled in the art to make or use the present invention. Various modifications to these aspects will be readily apparent to those skilled in the art, and the principles defined herein may be applied to other aspects without departing from the scope of the invention. Thus, the present invention is not intended to be limited to the aspects shown herein but is to be accorded the widest scope consistent with the principles and novel features disclosed herein.
**The invention also refers to the following embodiments, wherein the term "claim" means "embodiment":**
1. An interconnect, comprising:
   a first fuel inlet and a first fuel outlet that extend through the interconnect adjacent to respective opposing first and second peripheral edges of the interconnect;
   an air side comprising:
      an air field comprising air channels that extend in a first direction, from a third peripheral edge of the interconnect to an opposing fourth peripheral edge of the interconnect; and
      air side seal surfaces located on two opposing sides of the air field, and surrounding the first fuel inlet and the first fuel outlet; and
   a fuel side opposing the air side, the fuel side comprising:
      a fuel field comprising fuel channels that extend in the first direction;
      a fuel inlet manifold located between the fourth peripheral edge and the fuel field and configured to fluidly connect the first fuel inlet to first ends of the fuel channels;
      a fuel outlet manifold located between the third peripheral edge and the fuel field and configured to fluidly connect the first fuel outlet to second ends of the fuel channels; and
      a fuel side seal surface extending along the first, second, third, and fourth peripheral edges.
2. The interconnect of claim 1, wherein bottom surfaces of the fuel inlet manifold and the fuel outlet manifold are recessed with respect to the fuel side seal surface.
3. The interconnect of claim 1, wherein a first portion of the fuel side seal surface extends from the third peripheral edge, between the fuel field and the first fuel inlet, to the fuel inlet manifold, and a second portion of the fuel side seal surface extends from the fourth peripheral edge, between the fuel field and the first fuel outlet, to the fuel outlet manifold.
4. The interconnect of claim 1, further comprising:
   at least one additional fuel inlet located adjacent to the first peripheral edge;
   at least one additional fuel outlet located adjacent to the second peripheral edge; and
   neck regions separating the fuel inlets and the fuel outlets from one another,
   wherein fuel side surfaces of the neck regions are recessed with respect to the fuel side seal surface.
5. The interconnect of claim 1, wherein:
   a length of the first fuel inlet is at least 50% of a length of the first peripheral edge; and
   a length of the first fuel outlet is at least 50% of a length of the second peripheral edge.
6. The interconnect of claim 1, wherein the first fuel inlet and the first fuel outlet are located at diagonally opposing corners of the interconnect.
7. The interconnect of claim 6, further comprising:
   a second fuel inlet located adjacent to the second peripheral edge;
   a second fuel outlet located adjacent to the first peripheral edge,
   wherein the second fuel inlet and the second fuel outlet are located adjacent to diagonally opposing corners of the interconnect.
8. The interconnect of claim 7, wherein:
   the fuel inlet manifold fluidly connects the first and second fuel inlets to the first ends of the fuel channels; and
   the fuel outlet manifold fluidly connects the first and second fuel outlets to the second ends of the fuel channels.
9. An electrochemical cell stack, comprising:
   interconnects of claim 1 stacked over one another;
   electrochemical cells located between the interconnects, facing the fuel and air fields of adjacent interconnects,
   a fuel inlet riser at least partially defined by the first fuel inlets and configured to provide fuel to the fuel fields;
   a fuel outlet riser at least partially defined by the first fuel outlets and configured to receive anode exhaust from the fuel fields;
   riser seals located on the air side seal region of each interconnect and configured to prevent fuel in the fuel inlet and outlet risers from entering the air fields; and
   perimeter seals located on the fuel side seal region of each interconnect and configured to prevent air from entering the fuel fields.
10. The electrochemical cell stack of claim 9, wherein the electrochemical cells comprise solid oxide fuel cells or solid oxide electrolyzer cells that are free of through holes.
11. An interconnect, comprising:
   a fuel inlet and a fuel outlet that extend through the interconnect adjacent to respective opposing first and second peripheral edges of the interconnect;
   an air side comprising:
      an air field comprising air channels that extend in a first direction, wherein a portion of the air channels extend from the first peripheral edge of the interconnect to the second peripheral edge of the interconnect; and
      air side seal surfaces located along opposing third and fourth peripheral edges of the interconnect on two opposing sides of the air field, and air side seal surfaces surrounding the first fuel inlet and the first fuel outlet; and
   a fuel side opposing the air side, the fuel side comprising:
      a fuel field comprising fuel channels that extend in the first direction;
      a fuel inlet manifold extending in a second direction perpendicular to the first direction, and located between the first peripheral edge and the fuel field and configured to fluidly connect the fuel inlet to first ends of the fuel channels;
      a fuel outlet manifold extending in the second horizontal direction, and located between the second peripheral edge and the fuel field and configured to fluidly connect the fuel outlet to second ends of the fuel channels; and
      a fuel side seal surface extending along the first, second, third, and fourth peripheral edges.
12. The interconnect of claim 11, wherein the fuel inlet and the fuel outlet are located at diagonally opposing corners of the interconnect.
13. The interconnect of claim 12, wherein:
   a first group of air channels extend from the second peripheral edge of the interconnect to a location spaced from the first peripheral edge of the interconnect by a distance in the first direction greater than the length in the first direction of the fuel side seal surface surrounding the fuel inlet; and
   a second group of air channels extend from the first peripheral edge of the interconnect to a location spaced from the second peripheral edge of the interconnect by a distance in the first direction greater than the length in the first direction of the fuel side seal surface surrounding the fuel outlet.
14. The interconnect of claim 12, wherein:
   the air side further comprises:
   an air inlet manifold located adjacent at least two edges of the fuel outlet and adjacent the air side seal surface that extends along the fourth peripheral edge; and
   an air outlet manifold located adjacent at least two edges of the fuel inlet and adjacent the air side seal surface that extends along the third peripheral edge,
   wherein bottom surfaces of the air inlet manifold and the air outlet manifold are recessed with respect to the air side seal surfaces.
15. The interconnect of claim 11, wherein:
   the fuel inlet is located in between two portions of the fuel inlet manifold adjacent a middle portion of the first peripheral edge;
   the fuel out is located in between two portions of the fuel outlet manifold adjacent a middle portion of the second peripheral edge.
16. The interconnect of claim 15, wherein:
   the air side further comprises:
   an air inlet manifold located adjacent at least three edges of the fuel outlet; and
   an air outlet manifold located adjacent at least three edges of the fuel inlet,
   wherein bottom surfaces of the air inlet manifold and the air outlet manifold are recessed with respect to the air side seal surfaces.
17. The interconnect of claim 15, wherein:
   a group of air channels extend in the first direction from a region spaced from the fuel inlet to a region spaced from the fuel outlet.
18. An electrochemical cell stack, comprising:
   interconnects of claim 11 stacked over one another;
   electrochemical cells located between the interconnects, facing the fuel and air fields of adjacent interconnects,
   a fuel inlet riser at least partially defined by the first fuel inlets and configured to provide fuel to the fuel fields;
   a fuel outlet riser at least partially defined by the first fuel outlets and configured to receive anode exhaust from the fuel fields;
   riser seals located on the air side seal region of each interconnect and configured to prevent fuel in the fuel inlet and outlet risers from entering the air fields; and
   perimeter seals located on the fuel side seal region of each interconnect and configured to prevent air from entering the fuel fields.
19. The electrochemical cell stack of claim 18, wherein the electrochemical cells comprise solid oxide fuel cells or solid oxide electrolyzer cells that are free of through holes.
20. An interconnect, comprising:
   a first fuel inlet, a first fuel outlet, a first air inlet, and a first air outlet, all of which extend through the interconnect, the first fuel inlet and first air outlet located adjacent to a first peripheral edge of the interconnect, and the first fuel outlet and the first air inlet located adjacent to an opposing second peripheral edge of the interconnect;
   an air side comprising:
      an air field comprising air channels that extend in a first direction parallel to opposing third and fourth peripheral edges of the interconnect;
      an air inlet manifold fluidly connecting the first air inlet to first ends of the air channels;
      an air outlet manifold fluidly connecting the first air outlet to opposing second ends of the air channels; and
   a fuel side opposing the air side, the fuel side comprising:
      a fuel field comprising fuel channels that extend in the first direction;
      a fuel inlet manifold extending in a second direction perpendicular to the first direction and fluidly connecting the first fuel inlet to first ends of the fuel channels; and
      a fuel outlet manifold extending in the second direction and fluidly connecting the first fuel outlet to opposing second ends of the fuel channels.
21. The interconnect of claim 20, further comprising:
   a fuel side seal surface located on the fuel side, extending along the first, second, third, and fourth peripheral edges, and surrounding the first air inlet and the first air outlet; and
   an air side seal surface located on the air side, extending along the first, second, third, and fourth peripheral edges, and surrounding the first fuel inlet and the first fuel outlet,
   wherein bottom surfaces of the fuel inlet manifold and the fuel outlet manifold are recessed with respect to the fuel side seal surface, and
   wherein bottom surfaces of the air inlet manifold and the air outlet manifold are recessed with respect to the air side seal surface.
22. The interconnect of claim 20, wherein:
   the first fuel inlet and the first fuel outlet are located adjacent to first and second diagonally opposing corners of the interconnect; and
   the first air inlet and the first air outlet are located adjacent to third and fourth diagonally opposing corners of the interconnect.
23. The interconnect of claim 20, further comprising:
   a second air inlet fluidly connected to the air inlet manifold and located adjacent to the second peripheral edge; and
   a second air outlet fluidly connected to the air outlet manifold and located adjacent to the first peripheral edge,
   wherein the first fuel inlet is located between the first air inlet and the second air inlet, and
   wherein the first fuel outlet is located between the first air outlet and second air outlet.
24. The interconnect of claim 20, further comprising:
   a second fuel inlet fluidly connected to the fuel inlet manifold and located adjacent to the first peripheral edge; and
   a second fuel outlet fluidly connected to the fuel inlet manifold and located adjacent to the second peripheral edge,
   wherein the first air outlet is located between the first fuel inlet and the second fuel inlet, and
   wherein the first air inlet is located between the first fuel outlet and the second fuel outlet.
25. An electrochemical cell stack, comprising:
   interconnects of claim 20 stacked over one another;
   electrochemical cells located between the interconnects, facing the fuel and air fields of adjacent interconnects, wherein the electrochemical cells comprise solid oxide fuel cells or solid oxide electrolyzer cells that are free of through holes;
   a fuel inlet riser at least partially defined by the first fuel inlets and configured to provide fuel to the fuel fields;
   a fuel outlet riser at least partially defined by the first fuel outlets and configured to receive anode exhaust from the fuel fields;
   riser seals located on the air side seal region of each interconnect and configured to prevent fuel in the fuel inlet and outlet risers from entering the air fields; and
   perimeter seals located on the fuel side seal region of each interconnect and configured to prevent air from entering the fuel fields.
26. The electrochemical cell stack of claim 25, further comprising:
   an air inlet riser at least partially defined by the first air inlet and configured to provide air to the air fields; and
   an air outlet riser at least partially defined by the first air outlet and configured to receive air from the air fields.
27. An interconnect, comprising:
   fuel inlets and fuel outlets that extend through the interconnect adjacent to respective opposing first and second peripheral edges of the interconnect;
   an air side comprising:
      an air field comprising air channels that extend in a first direction, from a third peripheral edge of the interconnect to an opposing fourth peripheral edge of the interconnect; and
      air side seal surfaces located on two opposing sides of the air field, surrounding the fuel inlets and the fuel outlets; and
   a fuel side opposing the air side, the fuel side comprising:
      a fuel field comprising fuel channels that extend in the first direction and in a second direction perpendicular to the first direction; and
      a fuel side seal surface extending along the first, second, third, and fourth peripheral edges.
28. The interconnect of claim 27, further comprising neck regions located between the fuel inlets and between the fuel outlets,
   wherein fuel side surfaces of the neck regions are recessed with respect to the fuel side seal surface.
29. The interconnect of claim 27, wherein the fuel field comprises:
   a first region that has a right triangle shape and extends along the fourth peripheral edge;
   a third region that has a right triangle shape and extends along the third peripheral edge; and
   a second region that has a rhomboid shape and is located between the first and third regions,
   wherein fuel channels in the first and third regions extend in the second direction, and fuel channels in the second region extend in the first direction.
30. An electrochemical cell stack, comprising:
   interconnects of claim 27 stacked over one another;
   electrochemical cells located between the interconnects, facing the fuel and air fields of adjacent interconnects, wherein the electrochemical cells comprise solid oxide fuel cells or solid oxide electrolyzer cells that are free of through holes;
   a fuel inlet riser at least partially defined by the first fuel inlets and configured to provide fuel to the fuel fields;
   a fuel outlet riser at least partially defined by the first fuel outlets and configured to receive anode exhaust from the fuel fields;
   riser seals located on the air side seal region of each interconnect and configured to prevent fuel in the fuel inlet and outlet risers from entering the air fields; and
   perimeter seals located on the fuel side seal region of each interconnect and configured to prevent air from entering the fuel fields.

## Claims

1. An interconnect, comprising:
a first fuel inlet and a first fuel outlet that extend through the interconnect adjacent to respective opposing first and second peripheral edges of the interconnect;
an air side comprising:
an air field comprising air channels that extend in a first direction, from a third peripheral edge of the interconnect to an opposing fourth peripheral edge of the interconnect; and
air side seal surfaces located on two opposing sides of the air field, and surrounding the first fuel inlet and the first fuel outlet; and
a fuel side opposing the air side, the fuel side comprising:
a fuel field comprising fuel channels that extend in the first direction;
a fuel inlet manifold located between the fourth peripheral edge and the fuel field and configured to fluidly connect the first fuel inlet to first ends of the fuel channels;
a fuel outlet manifold located between the third peripheral edge and the fuel field and configured to fluidly connect the first fuel outlet to second ends of the fuel channels; and
a fuel side seal surface extending along the first, second, third, and fourth peripheral edges.

2. The interconnect of claim 1, wherein bottom surfaces of the fuel inlet manifold and the fuel outlet manifold are recessed with respect to the fuel side seal surface.

3. The interconnect of claim 1, wherein a first portion of the fuel side seal surface extends from the third peripheral edge, between the fuel field and the first fuel inlet, to the fuel inlet manifold, and a second portion of the fuel side seal surface extends from the fourth peripheral edge, between the fuel field and the first fuel outlet, to the fuel outlet manifold.

4. The interconnect of claim 1, further comprising:
at least one additional fuel inlet located adjacent to the first peripheral edge;
at least one additional fuel outlet located adjacent to the second peripheral edge; and
neck regions separating the fuel inlets and the fuel outlets from one another,
wherein fuel side surfaces of the neck regions are recessed with respect to the fuel side seal surface.

5. The interconnect of claim 1, wherein:
a length of the first fuel inlet is at least 50% of a length of the first peripheral edge; and
a length of the first fuel outlet is at least 50% of a length of the second peripheral edge.

6. The interconnect of claim 1, wherein the first fuel inlet and the first fuel outlet are located at diagonally opposing corners of the interconnect.

7. The interconnect of claim 6, further comprising:
a second fuel inlet located adjacent to the second peripheral edge;
a second fuel outlet located adjacent to the first peripheral edge,
wherein the second fuel inlet and the second fuel outlet are located adjacent to diagonally opposing corners of the interconnect.

8. The interconnect of claim 7, wherein:
the fuel inlet manifold fluidly connects the first and second fuel inlets to the first ends of the fuel channels; and
the fuel outlet manifold fluidly connects the first and second fuel outlets to the second ends of the fuel channels.

9. An electrochemical cell stack, comprising:
interconnects of claim 1 stacked over one another;
electrochemical cells located between the interconnects, facing the fuel and air fields of adjacent interconnects,
a fuel inlet riser at least partially defined by the first fuel inlets and configured to provide fuel to the fuel fields;
a fuel outlet riser at least partially defined by the first fuel outlets and configured to receive anode exhaust from the fuel fields;
riser seals located on the air side seal region of each interconnect and configured to prevent fuel in the fuel inlet and outlet risers from entering the air fields; and
perimeter seals located on the fuel side seal region of each interconnect and configured to prevent air from entering the fuel fields.

10. The electrochemical cell stack of claim 9, wherein the electrochemical cells comprise solid oxide fuel cells or solid oxide electrolyzer cells that are free of through holes.
